# EUROPÄISCHE PATENTANMELDUNG

(11) **EP 2 988 107 A1**
(43) Veröffentlichungstag der Anmeldung: **24.02.2016**
(21) Anmeldenummer: 15181318.5
(22) Anmeldetag: 18.08.2015
(51) Int. Cl.: G01L 9/14

(54) **ANORDNUNG UND VERFAHREN ZUR MAGNETO-TAKTILEN DETEKTION VON KRÄFTEN**

(30) Priorität: 20.08.2014 DE 102014111869
(71) Anmelder: Verein zur Förderung von Innovationen durch Forschung, Entwicklung und Technologietransfer e.V. (Verein INNOVENT e.V.), 07745 Jena (DE)
(72) Erfinder: TSCHAKAROW, Roland-Kosta, 71717 Beilstein (DE); HOLZHEY, Rocco, 07749 Jena (DE); JÖDICKE, Sven, 99085 Erfurt (DE)
(74) Vertreter: Oehmke, Volker

(57) **Zusammenfassung**

Die Erfindung betrifft eine Anordnung zur magneto-taktilen Detektion von Kräften, aufweisend eine Anzahl von diskreten Magneten (2), eine Anzahl von den Magneten (2) zugeordneten Sensoren (4) und eine elastisch deformierbare Schicht (1), wobei die Magnete (2) durch die deformierbare Schicht (1) relativ zu den Sensoren (4) mit bekannten Abständen zueinander und mit bekannter räumlicher Ausrichtung ihrer Pole (N, S) in einer vorbestimmten ersten Lage (L1) gehalten sind. Die Anordnung ist dadurch gekennzeichnet, dass zwischen der deformierbaren Schicht (1) und den Sensoren (4) eine Zwischenschicht (3) vorhanden ist, jeder Sensor (4) unabhängig von den anderen Sensoren (4) der Anordnung zur Erfassung und Ausgabe von durch Magnetfeldänderungen bewirkten Messsignalen ausgelegt ist und jeder Sensor (4) von einer unabhängigen Datenleitung (6) zur Übertragung der erfassten Messsignale an eine Auswerte- und Steuereinheit (7) als einen Empfänger kontaktiert ist. Die Erfindung betrifft zudem ein Verfahren zur taktilen Detektion von Krafteinwirkungen auf eine deformierbare Schicht (1).

## Beschreibung

Die Erfindung betrifft Anordnungen zur taktilen Detektion von Kräften, wie diese gattungsgemäß aus der US 5 325 869 A bekannt sind.

Anordnungen zur taktilen Detektion von Druckkräften, wie beispielsweise taktile Sensoren, sind aus dem technischen Gebiet der Robotik bekannt, wo diese zur Detektion von gewollten Berührungen und ungewollten Kollisionen beispielsweise zwischen Maschinenteilen oder Maschinenteilen und Menschen (fortan auch als Objekte bezeichnet) eingesetzt werden.

Für eine Reihe von Anwendungen ist es erwünscht, nicht nur eine Information über das Auftreten einer Berührung bzw. Kollision zu erhalten, sondern auch weitere Informationen wie den Ort, die Richtung und den Betrag der bei der Berührung bzw. Kollision einwirkenden Kraft erfassen zu können. Zudem ist eine Steuerung oder eine Beeinflussung von Bewegungsabläufen eines Körpers anhand sensitiver Bereiche seiner Oberfläche vorteilhaft.

So entwickelt das Fraunhofer-Institut für Fabrikbetrieb und Automatisierung (IFF) Sensorsysteme als taktile Detektorsysteme zur ortsaufgelösten Erfassung von Druckkräften auf der Basis piezoresistiver Polymerkomposite (Fraunhofer, IFF Magdeburg 03/2013). Das taktile Sensorsystem kann in Form einer Haut in beliebige Formen gebracht und auf der Oberfläche von Maschinen befestigt werden. Kommt es zu einer Kollision zwischen dem Maschinenteil und einem anderen Körper (Objekte), ist mittels des Sensorsystems die kollisionsbedingte Krafteinwirkung ortsaufgelöst erfassbar. Im Falle von Kollisionen oder der Überschreitung von Berührungskräften kann durch eine Steuerung regelnd in die Bewegung der Maschine eingegriffen werden. Die Sensorsysteme sind auch zur Verwendung auf Bedienungspanels geeignet.

Aus der DE 10 2009 040 486 B3 ist ein Magnetschaumsensor bekannt, der einen Grundkörper aus elastisch deformierbarem Material aufweist. In dem Grundkörper sind magnetische Partikel verteilt. Dem Grundkörper ist ein Magnetsensor zugeordnet. Wird der Grundkörper deformiert, ändert sich die räumliche Lage der magnetischen Partikel relativ zum Magnetsensor, wodurch zugleich eine Veränderung eines durch die magnetischen Partikel verursachten Magnetfelds bewirkt ist. Die Stärke der Veränderung des Magnetfelds wird durch den Magnetsensor erfasst.

In einer Anordnung zur taktilen Detektion von Druck- und Scherkräften nach der vorgenannten US 5 325 869 A ist ein Magnet auf einer elastisch deformierbaren Schicht angeordnet. Unter der elastisch deformierbaren Schicht ist ein Sensor zur Erfassung von Änderungen des Magnetfelds (Magnetsensor) vorhanden. Sowohl der Magnet als auch der Magnetsensor sind durch die elastisch deformierbare Schicht gehalten. Es ist möglich, eine Anzahl von Magneten und Sensoren auf einer elastisch deformierbaren Schicht anzuordnen, wodurch bei entsprechender Kontaktierung der Sensoren eine Ortsauflösung bei der Erfassung einwirkender Kräfte ermöglicht ist. Die Magnete und die Sensoren sind über die deformierbare Schicht unlösbar miteinander verbunden, so dass im Falle des Ausfalls nur eines Sensors der Austausch der gesamten Anordnung erforderlich ist. Im Falle einer Beschädigung entstehen daher hohe Kosten für den Austausch der Anordnung, die insbesondere durch die auszutauschende Sensorik bedingt sind.

Bei den bekannten Anordnungen ist nachteilig infolge einer matrix-orientierten elektrischen Verknüpfung der Sensoren bei Beschädigung nur eines einzigen Sensors gleich mit einem Totalausfall der gesamten Anordnung zu rechnen.

Der Erfindung liegt die Aufgabe zugrunde, eine Möglichkeit zur taktilen Detektion von Kräften vorzuschlagen, mittels der die aus dem Stand der Technik bekannten Nachteile zumindest weitgehend reduziert werden.

Die Aufgabe wird in einer Anordnung zur magneto-taktilen Detektion von Kräften, aufweisend eine Anzahl von diskreten Magneten mit festgelegten magnetischen Eigenschaften, eine Anzahl von den Magneten zugeordneten Sensoren und eine elastisch deformierbare Schicht, gelöst, wobei die Magnete durch die deformierbare Schicht relativ zu den Sensoren mit bekannten Abständen zueinander und mit bekannter räumlicher Ausrichtung ihrer Pole in einer vorbestimmten ersten Lage gehalten sind. Eine erfindungsgemäße Anordnung ist dadurch gekennzeichnet, dass zwischen der deformierbaren Schicht und den Sensoren eine Zwischenschicht vorhanden ist, dass jeder Sensor unabhängig von den anderen Sensoren der Anordnung zur Erfassung und Ausgabe von durch Magnetfeldänderungen bewirkten Messsignalen ausgelegt ist und jeder Sensor von einer unabhängigen Datenleitung zur Übertragung der erfassten Messsignale an einen Empfänger kontaktiert ist.

Unter einer magneto-taktilen Detektion wird eine Detektion verstanden, bei der durch Magnetfelder und Magnetfeldänderungen verursachte Messsignale erfasst und ausgewertet werden.

Eine elastisch deformierbare Schicht (nachfolgend auch kurz: deformierbare Schicht) kann aus einem Material wie beispielsweise weichem Gummi, Moosgummi, Schaumstoff, Kunststoff sowie aus Materialverbünden bestehen. Die elastisch deformierbare Schicht kann beispielsweise auch ein Gel oder ein gefülltes Kissen sein. Grundsätzlich kann die deformierbare Schicht auch aus jedem zum Schäumen geeigneten Kunststoff bestehen. Die deformierbare Schicht kann dabei ein offenzelliger Schaum, dessen Zellen miteinander in Verbindung stehen, ein gemischtzelliger Schaum mit offenen und geschlossenen Zellen oder ein Integralschaum mit porösem Inneren und einer geschlossenen Außenschicht sein.

Die diskreten Magnete sind vorzugsweise einzelne magnetische Körper und können durch Permanentmagnete gebildet sein, wie diese dem Fachmann allgemein bekannt sind. Diese können regelmäßige Formen, beispielsweise Quader, Kugeln oder Zylinder, sein. Es ist für die erfindungsgemäße Anordnung zwar vorteilhaft, jedoch nicht zwingend erforderlich, dass die Magnete einander hinsichtlich ihrer Formen, Dimensionierungen und / oder ihrer magnetischen Eigenschaften gleich sind.

Die Magnete können in einem Ausführungsbeispiel in Form einer Matrix in Zeilen und Spalten angeordnet sein. Eine solche Anordnung erleichtert die Zuordnung der Sensoren zu den Magneten. Außerdem bietet eine regelmäßige räumliche Verteilung der Magnete und der Sensoren eine bessere Ausgangssituation für eine sensorische Erfassung von Veränderungen der Magnetfelder, da wechselseitige Beeinflussungen der Magnete über die Ausdehnung der Anordnung etwa gleich sind.

Es ist in weiteren Ausgestaltungen der erfindungsgemäßen Anordnung möglich, dass statt einzelner, diskreter Magnete langgestreckte Magnete vorhanden sind, denen mehrere Sensoren zugeordnet sind. Vorzugsweise sind diese langgestreckten Magnete biegsam.

Weitere Ausgestaltungen der erfindungsgemäßen Anordnung weisen Fäden mit magnetischen Eigenschaften (Magnetfäden) auf. Diese können beispielsweise in die deformierbare Schicht eingewoben, eingeschlossen oder mit dieser verbunden sein. Die Magnetfäden sind dabei vorzugsweise matrixorientiert angeordnet. Das bedeutet, dass sich diese vorzugsweise über mehrere Zeilen oder Spalten einer Matrix erstrecken.

Es ist auch möglich, dass mehrere Magnetfäden zu Magnetfadenbündeln zusammengefasst sind.

Dabei ist es eine günstige Ausgestaltung der erfindungsgemäßen Anordnung, wenn sich Magnetfäden und / oder Magnetfadenbündel kreuzen. An den Kreuzungspunkten können vorteilhaft Sensoren angeordnet sein, durch die das Magnetfeld der beiden sich kreuzenden Magnetfäden bzw. Magnetfadenbündel detektierbar ist. Es sind natürlich auch Kombinationen von Magnetfäden und Magnetfadenbündeln möglich. Magnetfaden und Magnetfadenbündel werden nachfolgend vereinfachend jeweils auch als Magnetfaden bezeichnet.

In weiterführenden Ausgestaltungen können einzelne Magnetfäden oder sich kreuzende Magnetfäden lokal verdickt sein. An solchen lokalen Verdickungen sind stärkere Magnetfelder bewirkt als an dünneren Abschnitten der Magnetfäden.

Es ist möglich, dass einige oder alle Magnete / Magnetfäden mit einer gleichen Ausrichtung ihrer Pole angeordnet sind. In weiteren Ausgestaltungen ist es auch möglich, dass die Ausrichtung der Pole einiger oder aller Magnete / Magnetfäden in einer vorbestimmten Art, beispielsweise in einem bestimmten Muster, erfolgt ist. Durch die gezielte Ausrichtung der Pole der Magnete / Magnetfäden ist die Möglichkeit geschaffen, bestimmte Magnetfelder und Magnetfeldverteilungen zu schaffen. Diese Magnetfelder und Magnetfeldverteilungen können vorteilhaft auf Erfordernisse oder gewünschte Effekte einer Erfassung von Messwerten von Magnetfeldveränderungen abgestimmt sein.

Für die Zuordnung der Sensoren und für eine Auswertung der Messwerte ist es auch günstig, wenn die Magnete in weiteren Ausführungen der erfindungsgemäßen Anordnung äquidistant zueinander angeordnet sind.

Jeder Sensor kann einem Magneten oder einem Magnetfaden zugeordnet sein. Es ist in weiteren Ausführungen der erfindungsgemäßen Anordnung auch möglich, dass ein Sensor mehreren Magneten oder Magnetfäden zugeordnet ist. Ferner können mehrere Magnete oder Magnetfäden einem Sensor zugeordnet sein.

Magnete bzw. Magnetfäden und Sensor sind dann einander zugeordnet, wenn der Sensor innerhalb des Magnetfelds der betreffenden Magnete bzw. Magnetfäden angeordnet ist und durch den Sensor Veränderungen des Magnetfeldes detektierbar sind.

Die Sensoren können direkt unter einem Magneten oder unter einem Kreuzungspunkt von Magnetfäden angeordnet sein. Es ist auch möglich, dass Sensoren zwischen Magneten bzw. Magnetfäden angeordnet sind. Die Sensoren können dabei auf einer gedachten Verbindungslinie zwischen den Magneten angeordnet sein. Sie können auch unter einem Zwischenraum angeordnet sein, der durch benachbarte Magnetfäden oder durch benachbarte gedachte Verbindungslinien zwischen zwei Magneten bzw. Magnetfäden gebildet ist.

Die relativen räumlichen Lagebeziehungen der Magnete und der Sensoren zueinander in einem Ausgangszustand, z. B. nach der Montage und ohne Deformation, sind bekannt. Außerdem ist es günstig, wenn die relativen räumlichen Positionen der Magnete und der Sensoren bezüglich eines gewählten Koordinatensystems bekannt sind. Ein solches Koordinatensystem kann beispielsweise ein kartesisches Koordinatensystem oder ein Polarkoordinatensystem sein. Das Koordinatensystem kann dabei auf einen Raum oder Stellplatz bezogen sein, an dem die Anordnung verwendet wird. Das Koordinatensystem kann auch auf ein Gerät oder ein Geräteteil bezogen sein. Beispielsweise kann das Koordinatensystem ein Polarkoordinatensystem sein und auf einen Standort eines Gerätes bezogen sein, während die erfindungsgemäße Anordnung an einem beweglichen Teil des Gerätes, beispielsweise an einem Arm, angeordnet ist. Durch eine Verwendung solcher Koordinatensysteme ist es vorteilhaft möglich, eine erfasste Deformation bzw. ein Deformationsprofil mit einer bestimmten räumlichen Lage und / oder Bewegung des Gerätes bzw. des Geräteteils in Beziehung zu setzen.

Die Magnete können in der deformierbaren Schicht eingebettet sein, wodurch diese gegen äußere Einflüsse geschützt sind.

In einer vorteilhaften Ausführung der erfindungsgemäßen Anordnung ist die deformierbare Schicht mit der Zwischenschicht verbunden. Vorzugsweise ist die Verbindung lösbar. Durch eine lösbare Verbindung sind eine einfache Montage und insbesondere ein einfacher Austausch der deformierbaren Schicht mit den Magneten ermöglicht. Lösbare Verbindungen können beispielsweise dadurch geschaffen sein, dass die deformierbare Schicht adhäsiv an der Oberfläche der Zwischenschicht gehalten ist. Es können auch Bereiche der deformierbaren Schicht formschlüssig und / oder kraftschlüssig mit Bereichen der Zwischenschicht in Verbindung stehen.

Unter einer Zwischenschicht im Sinne dieser Beschreibung wird eine Schicht jedweden Materials oder Materialverbundes verstanden, durch das bzw. durch den hindurch eine Erfassung der Magnetfelder bzw. von Änderungen der Magnetfelder der Magnete durch die Sensoren ermöglicht ist. Eine Zwischenschicht kann durch eine oder mehrere Schichten des Materials oder des Materialverbundes gebildet sein. In einem praktisch sehr relevanten Beispiel ist die Zwischenschicht durch eine Gehäusewand eines Gerätes oder einer Maschine gebildet. Die Zwischenschicht dient der Trennung von deformierbarer Schicht und Sensoren. Sie kann auch, insbesondere wenn die Zwischenschicht aus einem nicht-deformierbaren Material besteht, als Widerlager bei einer Deformation der deformierbaren Schicht dienen. Nicht-deformierbare Materialien sind Materialien, die im Vergleich zum Material der deformierbaren Schicht bei Einwirken einer gleichen Kraft nicht oder nur unwesentlich deformiert werden.

Die Zwischenschicht kann in einer Ausführung der erfindungsgemäßen Anordnung auch aus einem elastisch deformierbaren Material bestehen. Beispielsweise kann die Zwischenschicht aus einem Schaumstoff bestehen.

Sensoren können beispielsweise Hall-Sensoren oder magneto-resistive Sensoren sein. Sehr günstig ist es, wenn die Sensoren sogenannte 3-Achsen-Sensoren, beispielsweise 3-Achsen-Hall-Sensoren oder 3-Achsen-Magnetfeldsensoren, sind. Durch die Verwendung von 3-Achsen-Sensoren ist eine Veränderung eines Magnetfeldes in mehr als einer Richtung detektierbar, was zu einer besseren Datengrundlage als bei Messungen in weniger als drei Achsen führt. Besonders für den mathematischphysikalischen Algorithmus ist das von Vorteil, da nur mit 3-Achsen-Sensoren die Gradientenfelder bestimmt werden können. Mit einem 1-Achsen-Sensor ist beispielsweise nicht ermittelbar, ob ein Feld in einem Raumpunkt an sich kleiner wird oder ob das Feld einfach nur seine Richtung ändert. Informationen dazu sind aber für die Etablierung und Anwendung eines effizienten Algorithmus äußerst vorteilhaft.

Es können in einer erfindungsgemäßen Anordnung unterschiedliche Sensoren angeordnet sein. Dabei kann ein Unterschied zwischen den Sensoren auf dem Wirkprinzip, der Konstruktionsweise sowie auf den technischen Eigenschaften der Sensoren, wie beispielsweise der Sensitivität, beruhen. Beispielsweise können an den Randbereichen einer erfindungsgemäßen Anordnung andere Sensoren als in einem zentralen Bereich der Anordnung vorhanden sein.

Unter unabhängigen Datenleitungen sind Datenleitungen zu verstehen, deren Funktionsweise und Funktionsfähigkeit nicht von der Funktionsweise oder Funktionsfähigkeit anderer Datenleitungen der erfindungsgemäßen Anordnung abhängt. Vorzugsweise können unabhängige Datenleitungen durch Bussysteme realisiert sein. Durch unabhängige Datenleitungen ist bei einem Ausfall eines der Sensoren die Funktionsfähigkeit der Anordnung weiterhin gegeben. Fällt ein Sensor aus, wird dieser Ausfall bei der Berechnung des Deformationsprofils berücksichtigt, vorzugsweise indem die Messwerte benachbart angeordneter Sensoren verwendet werden, um das Deformationsprofil kontinuierlich, beispielsweise durch Extrapolation, auch über den Bereich des ausgefallenen Sensors zu berechnen.

Zur Berechnung des Deformationsprofils ist in der erfindungsgemäßen Anordnung eine Auswerte- und Steuereinheit vorhanden, die eine Speichereinheit zur wiederholt abrufbaren Speicherung von Messwerten zugeordnet zu denjenigen Sensoren aufweist, durch welche die betreffenden Messwerte erfasst worden sind. Das Speichern erfolgt vorzugsweise so, dass zu mindestens einem Messzeitpunkt Messsignale eines jeden Sensors dem betreffenden Sensor zugeordnet erfasst und als Messwerte abgespeichert werden. Die Datenleitungen sind vorzugsweise signaltechnisch mit der Auswerte- und Steuereinheit verbunden. Die Auswerte- und Steuereinheit dient als Empfänger der erfassten Messsignale.

Zusätzlich können Mittel vorgesehen sein, um den gespeicherten Messwerten zusätzliche Daten wie Ort, Datum und Uhrzeit hinzuzufügen und ebenfalls diesen zugeordnet wiederholt abrufbar abzuspeichern. Die Auswerte- und Steuereinheit verfügt vorzugsweise über eine Recheneinheit (z. B. digitaler Signalprozessor; DSP), die so konfiguriert ist, dass ausgehend von Messwerten mindestens eines Zeitpunkts oder eines Zeitraums das Deformationsprofil der deformierbaren Schicht als eine dreidimensionale Berechnung der tatsächlich erfolgten oder derzeit erfolgenden Deformation ortsaufgelöst berechenbar ist.

Die erfindungsgemäße Anordnung kann zur Detektion einer Kollision der Anordnung mit einem Objekt verwendet werden. Ein Objekt ist ein Körper, der beispielsweise eine runde, abgerundete, spitze oder andere Form aufweist. Die Form des Körpers kann auch veränderlich sein (z. B. Gelkissen, Luftkissen). Von Bedeutung ist lediglich, dass das Objekt einen solchen physischen Widerstand zu leisten vermag, dass eine Deformation der deformierbaren Schicht und eine detektierbare Magnetfeldänderung bewirkt sind.

Die Aufgabe wird ferner in einem Verfahren zur magneto-taktilen Detektion von Krafteinwirkungen auf eine deformierbare Schicht gelöst, wobei in dem erfindungsgemäßen Verfahren zu mindestens einem Messzeitpunkt durch eine Krafteinwirkung diskrete Magnete aus einer ersten Lage, in der die Magnete mit bekannten Abständen und mit bekannter räumlicher Ausrichtung ihrer Pole zueinander angeordnet sind, in eine zweite Lage bewegt werden.

Mittels Sensoren, die den Magneten zugeordnet sind und deren jeweilige örtliche Anordnung bekannt ist, werden die Magnetfeldänderungen als Messsignale erfasst und als Messwerte abgespeichert. Aus den Messwerten wird ein Deformationsprofil mindestens über Bereiche der Ausdehnung der deformierbaren Schicht ortsaufgelöst berechnet. Dabei können insbesondere die bestimmten Magnetfelder und die Magnetfeldverteilungen berücksichtigt werden, die durch eine bestimmte Ausrichtung der Pole einiger oder aller Magnete hervorgerufen werden.

Das erfindungsgemäße Verfahren zeichnet sich durch die Möglichkeit der Erstellung eines Deformationsprofils aus. Dabei werden ortsaufgelöst einwirkende Kräfte berechnet, indem anhand der einzelnen Messwerte die Deformation mindestens von Bereichen der deformierbaren Schicht erstellt wird. Dabei besitzt das erstellte Deformationsprofil vorzugsweise eine höhere Ortsauflösung, als die räumliche Verteilung der Sensoren beträgt.

Es ist günstig, das erfindungsgemäße Verfahren unter Nutzung einer erfindungsgemäßen Vorrichtung durchzuführen.

Durch die Erfindung ist eine geometrisch flächendeckende, taktil wirkende Sensorik vorgeschlagen, deren Vorteile zum einen in der Möglichkeit der Trennung von Magneten und Sensoren liegt und die zum anderen eine hochauflösende Berechnung einer tatsächlich erfolgten oder aktuell erfolgenden Deformation der deformierbaren Schicht auch an Bereichen ermöglicht, an denen keine Magnete oder Sensoren angeordnet sind.

In einer weiterentwickelten Ausgestaltung des erfindungsgemäßen Verfahrens werden nicht nur Messwerte der einzelnen Sensoren berücksichtigt, durch die ein Maximum einer Magnetfeldänderung erfasst ist, sondern auch Messwerte von jeweils benachbart angeordneten Sensoren. Dabei fließt eine Fernwirkung lokal auftretender Druckkräfte auf die deformierbare Schicht in die Berechnung des Deformationsprofils mit ein. Eine Fernwirkung einer Krafteinwirkung und einer dadurch bewirkten Deformation zeigt sich darin, dass eine Deformation nicht nur unmittelbar im Bereich der Krafteinwirkung auftritt, sondern auch, abhängig beispielsweise von den Materialeigenschaften der deformierbaren Schicht, bis in eine gewisse Entfernung um den Bereich der unmittelbaren Krafteinwirkung vorliegt.

In einer weiterführenden Ausgestaltung des erfindungsgemäßen Verfahrens werden die Messwerte mit einem vorgegebenen Schwellwert verglichen. Bei einer festgestellten Überschreitung des vorgegebenen Schwellwertes an mindestens einem Bereich des Deformationsprofils wird ein Signal generiert. Dieses Signal kann beispielsweise ein Schaltsignal und / oder ein Warnsignal sein. Durch das Schaltsignal kann beispielsweise eine aktuelle Bewegung eines Gerätes oder eines Maschinenteils, das zum Beispiel mit einer erfindungsgemäßen Vorrichtung ausgerüstet ist, gestoppt werden. Es kann auch, entweder alternativ oder nach dem Stoppen, durch Ansteuerung von Antrieben des Gerätes bzw. des Maschinenteils eine andere Bewegung bewirkt werden.

Infolge der Berechnung des Deformationsprofils als ein kontinuierliches Profil ist es möglich, auch Messwerte, die nicht aus Messsignalen eines Sensors ermittelt sondern bei der Erstellung des Deformationsprofils berechnet wurden, mit Schwellwerten zu vergleichen.

Eine Überschreitung eines vorgegebenen Schwellwertes kann in einer weiteren Ausführung des Verfahrens zur Generierung eines Schaltsignals führen, das als ein Eingabesignal erfasst wird. Beispielsweise kann das Verfahren zur Erkennung von vorzugsweise manuellen Eingaben auf einem berührungssensitiven Bedienelement ("touchpad") verwendet werden. Dazu können Bereiche der deformierbaren Schicht als Eingabefelder festgelegt und diesen ein bestimmter Informationsgehalt zugeordnet werden. Kommt es in einem solchen festgelegten Bereich zu einer Überschreitung des Schwellwerts, wird die zugeordnete Information, beispielsweise ein Steuerbefehl zum Einschalten eines Gerätes, an einen Antrieb, eine Steuerung oder an eine Schalteinheit übermittelt.

Das Verfahren kann überall da verwendet werden, wo taktile Sensoren eingesetzt werden. Beispielsweise können taktile Sensoren in taktilen Matten (Sensormatten), Werkzeugmaschinen, Robotern, wie Montage-, Schweiß-, Handling- Bearbeitungs- oder Lackierrobotern, eingesetzt sein.

So kann das Verfahren zur taktilen Steuerung von N-DOF-Antriebssystemen verwendet werden. Dabei werden Deformationen definierter Bereiche (Areale) der deformierbaren Schicht erfasst. Eine erfasste Krafteinwirkung, z. B. durch eine Berührung dieser definierten Areale, führt zu einer Beeinflussung eines Bewegungsablaufs eines Antriebssystems. Ist durch eine erfasste Kraftweinwirkung eine festgestellte Deformation bewirkt, die oberhalb eines vorgegebenen Schwellwerts liegt, führt diese Überschreitung des Schwellwerts zu einer Beeinflussung eines Bewegungsablaufs eines Antriebssystems. Es ist dabei möglich, dass Informationen über eine erfolgte Berührung mit Informationen der zum Zeitpunkt der Berührung vorliegenden Positionen, Ausrichtungen und / oder Bewegungsabläufe des Antriebssystems oder eines durch das Antriebssystem angetriebenen Geräts oder Geräteteils verrechnet werden. Dadurch ist es beispielsweise möglich, dem Gerät den zur Verfügung stehenden Raum für Bewegungen anzulernen.

Die Erfindung wird nachfolgend anhand von Ausführungsbeispielen und Abbildungen näher erläutert. Es zeigen:
- Fig. 1: ein erstes Ausführungsbeispiel einer erfindungsgemäßen Anordnung,
- Fig. 2: ein zweites Ausführungsbeispiel einer erfindungsgemäßen Anordnung,
- Fig. 3: ein drittes Ausführungsbeispiel einer erfindungsgemäßen Anordnung,
- Fig. 4a: eine Krafteinwirkung auf eine erfindungsgemäße Anordnung und
- Fig. 4b: ein Deformationsprofil einer elastisch deformierbaren Schicht.

Alle Ausführungsbeispiele sind schematische Darstellungen. In allen Abbildungen bezeichnen gleiche Bezugszeichen gleiche technische Elemente.

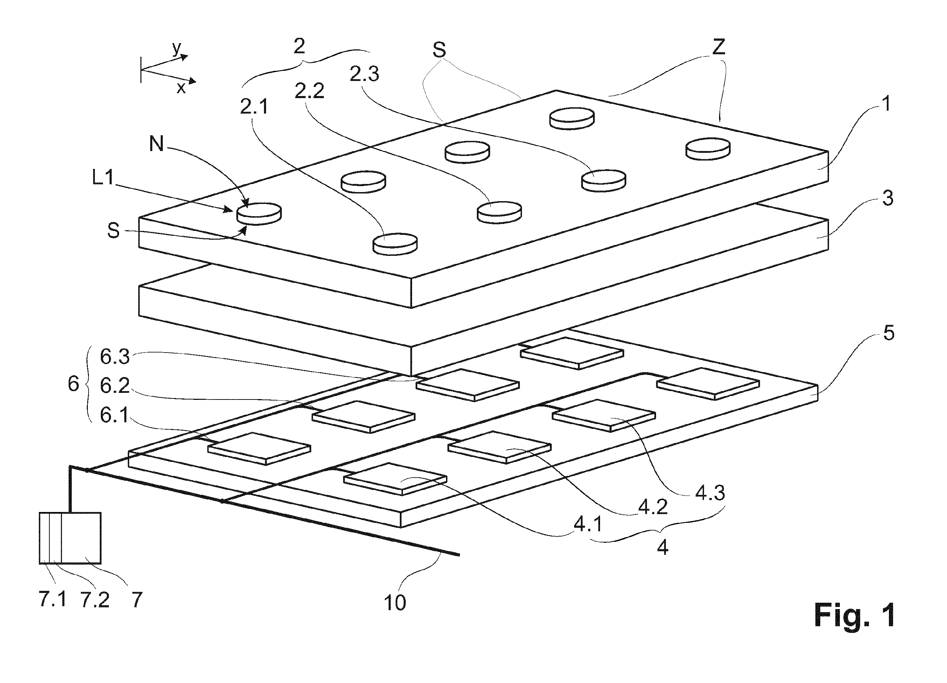

Als wesentliche Elemente einer erfindungsgemäßen Anordnung sind in einem ersten Ausführungsbeispiel in Fig. 1 eine elastisch deformierbare Schicht 1, eine Anzahl von Magneten 2, eine Zwischenschicht 3 und eine Anzahl von Sensoren 4 vorhanden.

Die einzelnen Schichten der Anordnung sind zur besseren Veranschaulichung in Fig. 1 voneinander getrennt dargestellt. Die Magnete 2 weisen eine flache zylinderförmige Form auf und sind auf einer nach oben weisenden Oberfläche der deformierbaren Schicht 1 aufgeklebt. Alle Magnete 2 weisen die gleiche Form, Größe und die gleichen magnetischen Eigenschaften (magnetische Parameter) auf. Die Magnete 2 sind in Zeilen Z und Spalten Sp (nur je zwei bezeichnet) äquidistant zueinander angeordnet und durch die deformierbare Schicht 1 in einer ersten Lage L1 (durch Pfeil symbolisiert) gehalten. Das Material der deformierbaren Schicht 1 ist ein offenzelliger Schaum aus Kunststoff.

Die deformierbare Schicht 1 liegt in einer montierten erfindungsgemäßen Anordnung vollflächig auf der Zwischenschicht 3 auf, die aus einem gemischtzelligen Schaum eines weiteren Kunststoffs besteht. Die deformierbare Schicht 1 und die Zwischenschicht 3 liegen auf einer Trägerschicht 5 auf, auf deren Oberfläche eine Anzahl von Hall-Sensoren als Sensoren 4 zur Erfassung von Messsignalen angeordnet sind. Jeder der Sensoren 4 ist einem Magneten 2 zugeordnet, indem jeweils ein Magnet 2 über einem senkrecht darunter angeordneten Sensor 4 platziert ist. Lediglich beispielhaft sind ein erster Magnet 2.1, ein zweiter Magnet 2.2 und ein dritter Magnet 2.3 gezeigt, denen jeweils ein darunter angeordneter erster Sensor 4.1, ein zweiter Sensor 4.2 bzw. ein dritter Sensor 4.3 zugeordnet ist. Die Magnete 2 sind relativ zu den Sensoren 4 mit bekannten Abständen zueinander und mit bekannter räumlicher Ausrichtung ihrer Pole (durch N für Nordpol und S für Südpol symbolisiert) in einer vorbestimmten ersten Lage L1 gehalten.

Der Oberfläche der deformierbaren Schicht 1 ist ein kartesisches Koordinatensystem zugeordnet.

Jeder der Sensoren 4 ist mit einer Datenleitung 6 verbunden, die Teil eines Bussystems 10 ist. Lediglich beispielhaft sind eine erste Datenleitung 6.1 des ersten Sensors 4.1, eine zweite Datenleitung 6.2 des zweiten Sensors 4.2 und eine dritte Datenleitung 6.3 des dritten Sensors 6.3 gezeigt. Die Datenleitungen 6.1, 6.2, 6.3 sind voneinander unabhängige Datenleitungen, da bei einem Ausfall einer der Datenleitungen 6.1, 6.2, 6.3 die übrigen Datenleitungen 6.1, 6.2, 6.3 weiterhin voll funktionsfähig bleiben. So können nach einem Ausfall einer der Sensoren 4 die Messsignale der übrigen Sensoren 4 weiterhin über die Datenleitungen 6 an eine Auswerte- und Steuereinheit 7 mit einer Speichereinheit 7.1 und einer in die Auswerte- und Steuereinheit 7 integrierten Recheneinheit 7.2 übertragen werden.

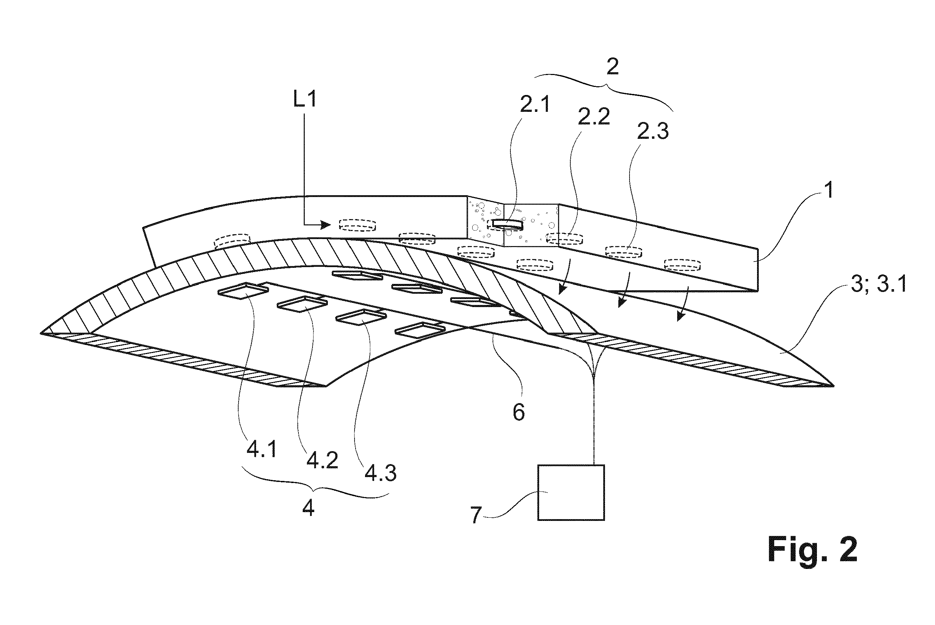

In einem in Fig. 2 dargestellten zweiten Ausführungsbeispiel der erfindungsgemäßen Anordnung sind die Magnete 2 in der deformierbaren Schicht 1 eingeschlossen und in einer ersten Lage L1 gehalten. Die Zwischenschicht 3 ist durch eine nicht-deformierbare Gehäusewand 3.1 eines Gehäuses (nicht gezeigt) eines Gerätes gebildet. Die deformierbare Schicht 1 ist auf der Zwischenschicht 3 aufgelegt und an deren Oberfläche durch Adhäsionskräfte zwischen der deformierbaren Schicht 1 und der Zwischenschicht 3 zuverlässig, aber lösbar gehalten. Die Lösbarkeit der deformierbaren Schicht 1 ist durch einen abgelösten Bereich der deformierbaren Schicht 1 gezeigt. Sollte die deformierbare Schicht 1 beschädigt werden, kann diese durch Abziehen von der Zwischenschicht 3 leicht abgelöst und gegen eine intakte deformierbare Schicht 1 ausgetauscht werden.

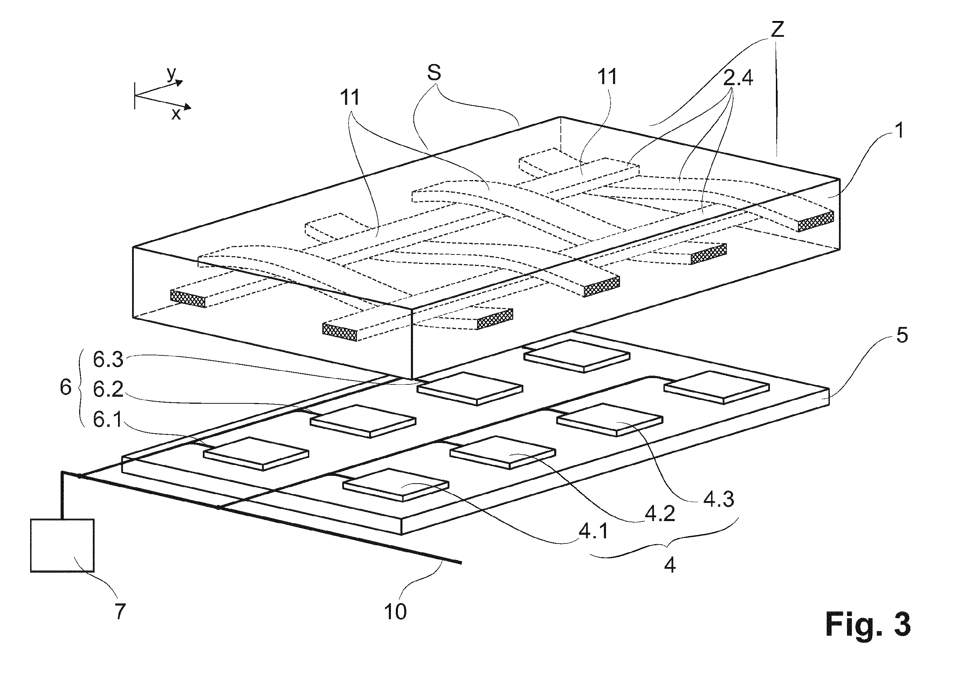

Ein drittes Ausführungsbeispiel ist in der Fig. 3 vereinfacht dargestellt. Die Magnete 2 sind als Magnetfäden 2.4 ausgebildet, die in der deformierbaren Schicht 1 eingeschlossen sind. Die Magnetfäden 2.4 sind matrixförmig miteinander verwoben und erstrecken sich jeweils entlang der Zeilen Z und Spalten Sp einer Matrix, in der die Magnetfäden 2.4 und die Sensoren 4 angeordnet sind. In dem dritten Ausführungsbeispiel sind die Sensoren 4 unter den Kreuzungspunkten 11 der Magnetfäden 2.4 angeordnet.

In weiteren Ausführungen der Anordnungen, sei es mit diskreten Magneten 2, mit Magnetfäden 2.4 oder mit einer Kombination von Magneten 2 und Magnetfäden 2.4, sind die Sensoren 4 zwischen den einzelnen Kreuzungspunkten 11 angeordnet.

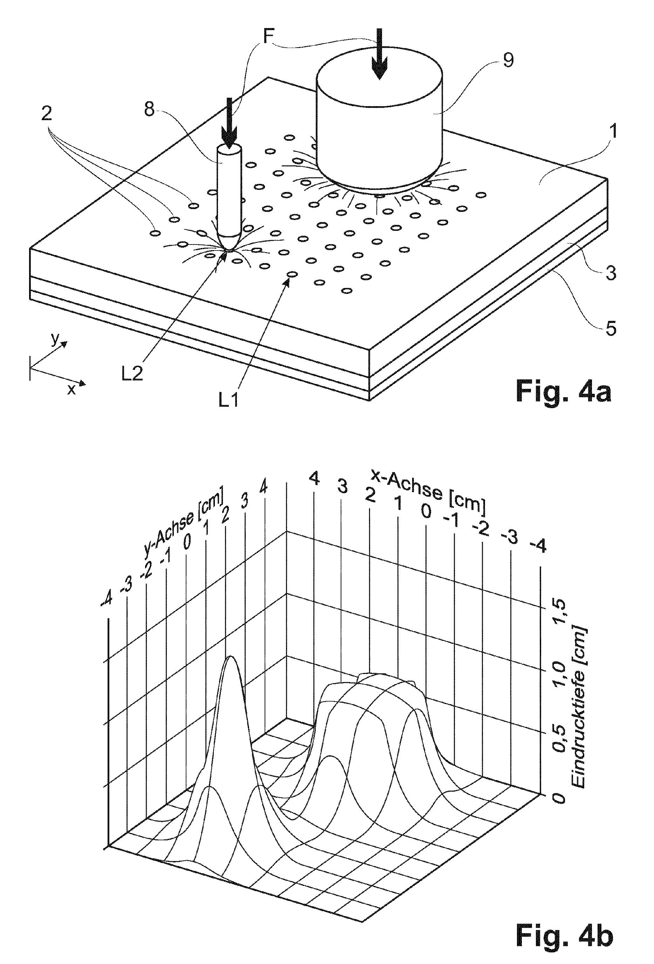

In der Fig. 4a ist eine erfindungsgemäße Anordnung gezeigt, deren deformierbare Schicht 1 durch einen spitzen Körper 8 und einen stumpfen Körper 9 (Objekte) jeweils mit einer Druckkraft F beaufschlagt wird, wodurch Druckkräfte F auf die deformierbare Schicht 1 einwirken. Die Magnete 2 verändern infolge der Krafteinwirkungen ihre Lage relativ zu den Sensoren 4 (in Fig. 4a nicht zu sehen), wodurch sich Änderungen in den von den Magneten 2 bewirkten und auf die Sensoren 4 einwirkenden Magnetfeldern ergeben. Die Magnete 2 im Bereich der Krafteinwirkungen sowie in Bereichen, die durch Fernwirkungen der Druckkräfte F deformiert sind, sind aus einer ersten Lage L1 in eine zweite Lage L2 verschoben. Diese Änderungen verursachen in den Sensoren 4 Messsignale, die als Messwerte erfasst und in der Auswerte- und Steuereinheit 7 (siehe Fig. 1) abgespeichert und verarbeitet werden. Die Messwerte sind dabei den Sensoren 4, durch die sie erfasst wurden, sowie Messzeitpunkten zugeordnet.

Anhand der den Sensoren 4 und Messzeitpunkten zugeordneten Messwerten wird in der Auswerte- und Steuereinheit 7 mittels der Recheneinheit 7.2 ein Deformationsprofil der deformierbaren Schicht 1 berechnet, wie dies beispielhaft und schematisch in Fig. 4b gezeigt ist. Zu sehen ist eine ortsaufgelöste Darstellung von Deformationen durch Druckkräfte F, die bei einem zeitgleichen Beaufschlagen der deformierbaren Schicht 1 durch den spitzen Körper 8 und den stumpfen Körper 9 auf die deformierbare Schicht 1 einwirken. Sowohl entlang der x-Achse als auch entlang der y-Achse des kartesischen Koordinatensystems ist je eine Deformation als ein ortsaufgelöstes dreidimensionales Deformationsprofil dargestellt. Entlang einer Achse in z-Richtung des Deformationsprofils ist die Dickenänderung der deformierbaren Schicht 1 als Eindrucktiefe ortsaufgelöst aufgetragen.

Anhand der Fig. 2 wird die Durchführung eines ersten Ausführungsbeispiels des erfindungsgemäßen Verfahrens erläutert. Die erfindungsgemäße Vorrichtung sei an der Oberfläche eines beweglichen Arms eines Roboters (beide nicht gezeigt) befestigt. Die Gehäusewand 3.1 des Roboterarms stellt die Zwischenschicht 3 dar. Zur Erklärung sei auf den ersten bis dritten Magneten 2.1 bis 2.3 und den ersten bis dritten Sensor 4.1 bis 4.3 abgestellt. Zu Beginn des Verfahrens sind die Magnete 2.1 bis 2.3 durch die deformierbare Schicht 1 relativ zu den Sensoren 4.1 bis 4.3 mit bekannten Abständen zueinander und mit bekannter räumlicher Ausrichtung ihrer Pole N, S in einer vorbestimmten ersten Lage L1 gehalten. Durch die Magnete 2.1 bis 2.3 sind Magnetfelder bewirkt, die sich in der ersten Lage L1 nicht verändern. Die Sensoren 4.1 bis 4.3 werden angesteuert und die erfassten Messsignale werden als Messwerte den Sensoren 4.1 bis 4.3 zugeordnet in der Auswerte- und Steuereinheit 7 abgespeichert. Die Messwerte werden mit der ersten Lage L1 der Magnete 2.1 bis 2.3 assoziiert und dienen als Ausgangswerte für eine Ausgangssituation, in der keine zusätzlichen Kräfte auf die deformierbare Schicht 1 einwirken. Treten Kräfte auf, die groß genug sind, um die deformierbare Schicht 1 wenigstens bereichsweise zu verformen, werden die ersten bis dritten Magnete 2.1 bis 2.3 aus der ersten Lage L1 in die zweite Lage L2 verschoben (siehe auch Fig. 4a). Da dabei die relative Lagebeziehung der Magnete 2.1 bis 2.3 untereinander und relativ zu den Sensoren 4.1 bis 4.3 verändert wird, treten auch Änderungen der detektierten Magnetfelder auf. Diese Änderungen werden durch die Sensoren 4.1 bis 4.3 als Messsignale erfasst und den Sensoren 4.1 bis 4.3 zugeordnet in der Auswerte- und Steuereinheit 7 abgespeichert. Zudem werden die Unterschiede der Messwerte der ersten Lage L1 und der Messwerte der zweiten Lage L2 miteinander verglichen. Aus den Differenzen der Messwerte, den räumlichen Lagebeziehungen der Sensoren 4.1 bis 4.3 und der Magnete 2.1 bis 2.3 sowie der Kenntnis über Eigenschaften des Materials der deformierbaren Schicht 1 wie Elastizität und Druckfestigkeit wird ein Deformationsprofil der deformierbaren Schicht 1 berechnet und in der Auswerte- und Steuereinheit 7 abgespeichert. Das berechnete Deformationsprofil wird einem Benutzer der Anordnung grafisch dargestellt.

Über den gesamten Verlauf des Deformationsprofils werden die jeweils an einem Punkt der deformierbaren Schicht 1 berechneten Deformationen als Deformationswerte bereitgestellt und mit einem oder mehreren vorgegebenen Schwellwert(-en) verglichen. Wird eine Überschreitung mindestens eines Schwellwerts festgestellt, wird durch die Auswerte- und Steuereinheit 7 ein Steuersignal generiert, durch das eine Bewegung des Roboterarms gestoppt wird.

In weiteren Ausgestaltungen des erfindungsgemäßen Verfahrens kann eine Überschreitung des Schwellwertes auf Plausibilität geprüft werden, indem eine Überschreitung auch zu einem weiteren Messzeitpunkt festgestellt werden muss, um tatsächlich als Überschreitung akzeptiert zu werden. Es ist auch möglich, dass bei einer Überschreitung des Schwellwerts an einem Punkt geprüft wird, ob auch an mindestens einer festgelegten Anzahl benachbarter Punkte eine Überschreitung des Schwellwerts festgestellt wird. Die Kriterien der Überprüfung der Plausibilität können in weiteren Ausgestaltungen des Verfahrens auch kombiniert werden.

### Bezugszeichenliste

- 1: deformierbare Schicht
- 2: Magnet
- 2.1: erster Magnet
- 2.2: zweiter Magnet
- 2.3: dritter Magnet
- 2.4: Magnetfaden
- 3: Zwischenschicht
- 3.1: Gehäusewand
- 4: Sensor
- 4.1: erster Sensor
- 4.2: zweiter Sensor
- 4.3: dritter Sensor
- 5: Trägerschicht
- 6: Datenleitung
- 6.1: erste Datenleitung
- 6.2: zweite Datenleitung
- 6.3: dritte Datenleitung
- 7: Auswerte- und Steuereinheit
- 7.1: Speichereinheit
- 7.2: Recheneinheit
- 8: spitzer Körper
- 9: stumpfer Körper
- 10: Bussystem
- 11: Kreuzungspunkt
- L1: erste Lage
- L2: zweite Lage
- N: Nordpol
- S: Südpol
- F: Druckkraft
- Z: Zeile
- Sp: Spalte

## Patentansprüche

1. Anordnung zur magneto-taktilen Detektion von Kräften, aufweisend eine Anzahl von diskreten Magneten (2) mit festgelegten magnetischen Eigenschaften, eine Anzahl von den Magneten (2) zugeordneten Sensoren (4) und eine elastisch deformierbare Schicht (1), wobei die Magnete (2) durch die deformierbare Schicht (1) relativ zu den Sensoren (4) mit bekannten Abständen zueinander und mit bekannter räumlicher Ausrichtung ihrer Pole (N, S) in einer vorbestimmten ersten Lage (L1) gehalten sind, **dadurch gekennzeichnet, dass**
- zwischen der deformierbaren Schicht (1) und den Sensoren (4) eine Zwischenschicht (3) vorhanden ist,
- jeder Sensor (4) unabhängig von den anderen Sensoren (4) der Anordnung zur Erfassung und Ausgabe von durch Magnetfeldänderungen bewirkten Messsignalen ausgelegt ist und
- jeder Sensor (4) von einer unabhängigen Datenleitung (6) zur Übertragung der erfassten Messsignale an einen Empfänger kontaktiert ist.

2. Anordnung nach Anspruch 1, **dadurch gekennzeichnet, dass** die Magnete (2) in Form einer Matrix in Zeilen (Z) und Spalten (Sp) angeordnet sind.

3. Anordnung nach Anspruch 1 oder 2, **dadurch gekennzeichnet, dass** die Magnete (2) äquidistant zueinander angeordnet sind.

4. Anordnung nach einem der Ansprüche 1 bis 3, **dadurch gekennzeichnet, dass** die deformierbare Schicht (1) mit der Zwischenschicht (3) verbunden ist.

5. Anordnung nach einem der Ansprüche 1 bis 4, **dadurch gekennzeichnet, dass** die Zwischenschicht (3) aus einem elastisch deformierbaren Material besteht.

6. Anordnung nach einem der Ansprüche 1 bis 4, **dadurch gekennzeichnet, dass** die Zwischenschicht (3) aus einem nicht-deformierbaren Material besteht.

7. Anordnung nach einem der vorhergehenden Ansprüche, **dadurch gekennzeichnet, dass** die Magnete (2) in der deformierbaren Schicht (1) eingebettet sind.

8. Anordnung nach einem der vorhergehenden Ansprüche, **dadurch gekennzeichnet, dass** die Datenleitungen (6) signaltechnisch mit einer Auswerte- und Steuereinheit (7) verbunden sind, wobei die Auswerte- und Steuereinheit (7) eine Speichereinheit (7.1) beinhaltet, deren Konfiguration es ermöglicht, zu mindestens einem Messzeitpunkt Messsignale eines jeden Sensors (4) dem Sensor (4) zugeordnet zu erfassen und als Messwerte abzuspeichern, und die Auswerte- und Steuereinheit (7) eine Recheneinheit (7.2) beinhaltet, deren Konfiguration es ermöglicht, aus der Anzahl von Messwerten ein Deformationsprofil der deformierbaren Schicht (1) mindestens über Bereiche der Ausdehnung der deformierbaren Schicht (1) ortsaufgelöst zu berechnen.

9. Verwendung der Anordnung nach Anspruch 8 zur Detektion einer Kollision der Anordnung mit einem Objekt.

10. Verfahren zur magneto-taktilen Detektion von Krafteinwirkungen auf eine deformierbare Schicht (1),
- bei dem zu mindestens einem Messzeitpunkt durch eine Krafteinwirkung diskrete Magnete (2) aus einer ersten Lage (L1), in der die Magnete (2) mit bekannten Abständen und mit bekannter räumlicher Ausrichtung ihrer Pole (N, S) zueinander angeordnet sind, in eine zweite Lage (L2) bewegt werden,
- bei dem ferner mittels den Magneten (2) zugeordneter Sensoren (4), deren jeweilige örtliche Anordnung bekannt ist, die Magnetfeldänderungen als Messsignale erfasst und als Messwerte abgespeichert werden und
- aus den Messwerten ein Deformationsprofil mindestens über Bereiche der Ausdehnung der deformierbaren Schicht (1) ortsaufgelöst berechnet wird.

11. Verfahren nach Anspruch 10, **dadurch gekennzeichnet, dass** bei einer Überschreitung eines vorgegebenen Schwellwertes an mindestens einem Bereich des Deformationsprofils ein Signal generiert wird.

12. Verwendung des Verfahrens nach Anspruch 10 zur taktilen Steuerung von N-DOF-Antriebssystemen mittels der Deformation an definierten Arealen, wobei eine festgestellte Deformation oberhalb eines vorgegebenen Schwellwerts zu einer Beeinflussung eines Bewegungsablaufs eines Antriebssystems führt.
